(19) Europäisches Patentamt
European Patent Office
Office européen des brevets

(11) **EP 4 592 337 A1**

(12) **EUROPEAN PATENT APPLICATION**

(43) Date of publication:
**30.07.2025 Bulletin 2025/31**

(51) International Patent Classification (IPC):
**C08J 5/18** *(2006.01)* **C08L 67/04** *(2006.01)*

(21) Application number: **25153848.4**

(22) Date of filing: **24.01.2025**

(52) Cooperative Patent Classification (CPC):
(C-Sets available)
**C08J 5/18; C08L 67/04;** C08J 2367/04;
C08J 2423/08 (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.01.2024 KR 20240012687**

(71) Applicants:
• **SK innovation Co., Ltd.**
**Seoul 03188 (KR)**

• **SK Geo Centric Co., Ltd.**
**Seoul 03188 (KR)**

(72) Inventors:
• **LEE, Sang Yeup**
**34124 Daejeon (KR)**
• **SON, Sang Ha**
**34124 Daejeon (KR)**

(74) Representative: **Thoma, Michael**
**Lorenz Seidler Gossel**
**Rechtsanwälte Patentanwälte**
**Partnerschaft mbB**
**Widenmayerstraße 23**
**80538 München (DE)**

(54) **RESIN COMPOSITION INCLUDING POLY(LACTIC-CO-GLYCOLIC ACID) AND FILM INCLUDING THE SAME**

(57) A poly(lactic-co-glycolic acid)-containing resin composition according to exemplary embodiments may include a poly(lactic-co-glycolic acid) (PLGA) polymer, a zinc-containing ionomer (Zn ionomer) and an ethylene terpolymer. The PLGA polymer may exceed 65 wt% and less than 100 wt% based on a total weight of the resin composition.

EP 4 592 337 A1

(52) Cooperative Patent Classification (CPC): (Cont.)

C-Sets
**C08L 67/04, C08L 23/0869, C08L 23/0876;**
**C08L 67/04, C08L 23/0876, C08L 23/0869**

**Description**

[BACKGROUND OF THE INVENTION]

1. Field of the Invention

The present disclosure relates to a resin composition including poly(lactic-co-glycolic acid) and a film including the same, and more specifically, to a resin composition including a blend of a poly(lactic-co-glycolic acid)-containing resin and a film including the same.

2. Description of the Related Art

A biodegradable resin is a resin that can be decomposed by other organic organisms such as bacteria, microorganisms, etc. Due to strengthened environmental regulations according to the worsening of environmental pollution caused by existing non-decomposable polymers, demand for the biodegradable resin as a substitute for a non-decomposable resin is increasing. In addition, the biodegradable resin has recently been utilized in various industrial fields such as a packaging industry, electronics industry, automobile industry, building materials industry, marine industry, stationery industry, pulp and paper industry, etc.

Examples of the biodegradable resin may include poly(glycolic acid) (PGA), poly(butylene succinate) (PBS), polyhydroxyalkanoate (PHA), polylactic acid (PLA), poly(lactic-co-glycolic acid) (PLGA), etc. Among them, PLGA is a synthetic resin produced by copolymerization of a glycolic acid monomer and a lactic acid monomer, and has excellent biodegradability, as well as excellent gas barrier properties as a resin having a linear structure.

In addition, the PLGA resin includes an ester bond therein, and has excellent mechanical strength and high brittleness due to high crystallinity. Therefore, attempts to develop a barrier film having high gas barrier properties, excellent biodegradability, and durability using the PLGA resin are being conducted.

However, the PLGA resin has problems that it is difficult to maintain a film structure due to excessively high biodegradability, and it is also difficult to mass produce due to the high price thereof.

[SUMMARY OF THE INVENTION]

An object of the present disclosure is to provide a resin composition including poly(lactic-co-glycolic acid) which provides improved barrier properties.

Another object of the present disclosure is to provide a film formed from the resin composition and having improved barrier properties.

To achieve the above objects, according to an aspect of the present invention, there is provided a resin composition including poly(lactic-co-glycolic acid) ("poly(lactic-co-glycolic acid)-containing resin composition"), which includes: a poly(lactic-co-glycolic acid) (PLGA) polymer; a zinc-containing ionomer; and an ethylene terpolymer, wherein the PLGA polymer is 65 % by weight or more and less than 100 % by weight based on a total weight of the poly(lactic-co-glycolic acid)-containing resin composition.

In some embodiments, the zinc-containing ionomer may include a terpolymer of ethylene, zinc (meth)acrylate and (meth)acrylic acid.

In some embodiments, the ethylene terpolymer may include a copolymer of ethylene, glycidyl (meth)acrylate and alkyl (meth)acrylate.

In some embodiments, a content of the PLGA polymer may be 65 % by weight to 98 % by weight or 65 % by weight to 90 % by weight or 65 % by weight to 85 % by weight or 70 % by weight to 98 % by weight based on the total weight of the poly(lactic-co-glycolic acid)-containing resin composition.

In some embodiments, a content of the zinc-containing ionomer may be 1 % by weight to 34 % by weight or 5 % by weight to 30 % by weight or 5 % by weight to 25 % by weight based on the total weight of the poly(lactic-co-glycolic acid)-containing resin composition.

In some embodiments, a content of the ethylene terpolymer may be 1 % by weight to 34 % by weight or 5 % by weight to 30 % by weight or 5 % by weight to 25 % by weight based on the total weight of the poly(lactic-co-glycolic acid)-containing resin composition.

In some embodiments, a sum of the content of the zinc-containing ionomer and the content of the ethylene terpolymer may be 2 % by weight to 35 % by weight or 6 % by weight to 35 % by weight based on the total weight of the poly(lactic-co-glycolic acid)-containing resin composition.

In some embodiments, a content of the ethylene terpolymer may be the content of the zinc-containing ionomer or more in the total weight of the poly(lactic-co-glycolic acid)-containing resin composition.

In some embodiments, a melt viscosity of the poly(lactic-co-glycolic acid)-containing resin composition measured under conditions of 230°C, 5% strain, and 0.1 Hz frequency may be 500 Pa·s to 20,000 Pa·s.

In some embodiments, a melt flow index of the poly(lactic-co-glycolic acid)-containing resin composition measured under conditions of 230°C and 2.16 kg load may be 1 g/10 min to 100 g/10 min.

According to another aspect of the present invention, there is provided a film formed from the resin composition including poly(lactic-co-glycolic acid).

In some embodiments, the film may have a thickness of 100 μm to 300 μm.

In some embodiments, an oxygen transmittance rate of the film measured at a relative humidity of 0% and a temperature of 25 °C may be 50 g/m$^2$·day or less.

In some embodiments, a mass reduction rate of the film calculated according to Equation 1 below may be 5% to 85%.

[Equation 1]

$$\text{Mass reduction rate } (\%) = \frac{W_i - W_f}{W_i} \times 100$$

wherein $W_i$ is an initial mass (g) of the film, and $W_f$ is a mass (g) of the film measured after the film is left in soil under composting conditions according to ISO 20200 for 6 months.

In some embodiments, an oxygen transmittance rate of the film may satisfy Equation 2 below.

[Equation 2]

$$\text{OTR (PLGA-Poly)} < 0.1 \, (x \cdot \text{OTR (PLGA)} + (1-x) \cdot \text{OTR (Poly)})$$

wherein OTR (PLGA-Poly) is the oxygen transmittance rate of the film formed from the poly(lactic-co-glycolic acid)-containing resin composition, OTR (PLGA) is an oxygen transmittance rate of a film including only poly(lactic-co-glycolic acid), OTR (Poly) is an oxygen transmittance rate of a film including only a resin including a zinc-containing ionomer or an ethylene terpolymer, and x is in a range of $0.65 \leq x < 1$.

The resin composition according to exemplary embodiments may include a poly(lactic-co-glycolic acid (PLGA) polymer. Accordingly, the resin composition may have improved biodegradability. In addition, since the resin composition may include an additional component other than the PLGA polymer, the resin composition may have improved structural stability.

The film according to exemplary embodiments may include the PLGA-containing resin composition. Accordingly, a gas permeation path inside the film may become complex, such that the gas transmittance may be reduced, and the biodegradability and environmental friendliness may be improved due to the PLGA polymer included in the film.

[BRIEF DESCRIPTION OF THE DRAWINGS]

The above and other objects, features and other advantages of the present disclosure will be more clearly understood from the following detailed description taken in conjunction with the accompanying drawings, in which:

FIG. 1 is a graph illustrating measured values of an oxygen transmittance rate and estimated values of the oxygen transmittance rate of a film according to exemplary embodiments;

FIGS. 2A, 3A and 4A are photographs of films according to exemplary examples and comparative examples; and FIGS. 2B, 3B and 4B are photographs illustrating a degree of biodegradation when the films according to exemplary examples and comparative examples are left in soil under composting conditions.

[DETAILED DESCRIPTION OF THE INVENTION]

According to exemplary embodiments, a poly(lactic-co-glycolic acid)-containing resin composition which includes a poly(lactic-co-glycolic acid) (PLGA) polymer, a zinc ionomer (ZnIO) and an ethylene terpolymer, and a film including the poly(lactic-co-glycolic acid)-containing resin composition are provided.

Hereinafter, the present disclosure will be described in detail through embodiments with reference to the accompanying drawings. However, the embodiments are merely illustrative and the present disclosure is not limited to the specific embodiments described by way of example.

According to exemplary embodiments, the poly(lactic-co-glycolic acid)-containing resin composition may include a PLGA polymer, ZnIO and ethylene terpolymer.

The PLGA polymer is a copolymer of a glycolic acid monomer and a lactic acid monomer. Since the lactic acid monomer is introduced into the PLGA polymer, it has lower brittleness and higher flexibility than the poly(glycolic acid). Accordingly, the PLGA polymer may have high biodegradability and workability. In addition, the PLGA polymer may have crystallinity due to an ester bond of the glycolic acid. Thereby, the resin composition containing the PLGA polymer may have improved gas barrier properties.

The "PLGA" or "poly(lactic-co-glycolic acid)" of the present specification may be a compound referred to as poly(glycolic acid-co-lactic acid) (PGLA).

The "poly(lactic-co-glycolic acid)-containing resin composition" of the present specification may be referred to as the resin composition.

The ZnIO is a type of a polymer including zinc of a transition metal, and has low hygroscopic property and moisture content. Thus, the poly(lactic-co-glycolic acid)-containing resin composition may have improved structural stability due to a coordination bonding with an ester group of the PLGA polymer.

The ethylene terpolymer is a polymer in which three basic monomers including a monomer derived from ethylene are copolymerized, and may have improved structural stability due to crosslinking formed between the PLGA polymer and the ZnIO.

In some embodiments, the ZnIO may include a terpolymer of ethylene, zinc (meth)acrylate and (meth)acrylic acid ("ethylene-zinc (meth)acrylate-(meth)acrylic acid terpolymer").

The ethylene-zinc (meth)acrylate-(meth)acrylic acid terpolymer is a polymer having a structure in which a zinc ion ($Zn^{2+}$) is ionically bonded to a carboxylate anion (-COO$^-$). The zinc ion of the ethylene-zinc (meth)acrylate-(meth)acrylic acid terpolymer is a transition metal ion, and may form a coordination bond with the ester group of the PLGA polymer. Accordingly, the ethylene-zinc (meth)acrylate-(meth)acrylic acid terpolymer may be included in the poly(lactic-co-glycolic acid)-containing resin composition, thereby improving the durability and melt strength.

In one embodiment, the content of an ethylene monomer in the ethylene-zinc (meth)acrylate-(meth)acrylic acid terpolymer is not limited, but may be, for example, 70% by weight ("wt%") to 98 wt%, 73 wt% to 95 wt%, or 76 wt% to 92 wt% based on a total weight of the ethylene-zinc (meth)acrylate-(meth)acrylic acid terpolymer.

In one embodiment, the content of a zinc (meth)acrylate monomer in the ethylene-zinc (meth)acrylate-(meth) acrylic acid terpolymer is not limited, but may be, for example, 1 wt% to 20 wt%, 1 wt% to 17 wt%, or 1 wt% to 14 wt% based on the total weight of the ethylene-zinc (meth)acrylate-(meth)acrylic acid terpolymer.

In one embodiment, the content of a (meth)acrylic acid monomer in the ethylene-zinc (meth)acrylate-(meth) acrylic acid terpolymer is not limited, but may be, for example, 1 wt% to 29 wt%, 4 wt% to 26 wt%, or 7 wt% to 23 wt% based on the total weight of the ethylene-zinc (meth)acrylate-(meth)acrylic acid terpolymer.

In some embodiments, the ethylene terpolymer may include a copolymer of ethylene, glycidyl (meth)acrylate and alkyl (meth)acrylate (hereinafter, EAG). For example, the ethylene terpolymer may include a copolymer of ethylene, glycidyl methacrylate and alkyl acrylate.

The EAG is an ethylene polymer including a glycidyl group. The glycidyl group is included in the poly(lactic-co-glycolic acid)-containing resin composition, and may be bonded to a carboxyl group of at least one of the PLGA polymer and ZnIO.

Accordingly, the poly(lactic-co-glycolic acid)-containing resin composition may be extended, and the polymer structure may become complex (for example, a branched structure, a network structure, etc.). Therefore, the poly(lactic-co-glycolic acid)-containing resin composition may have improved melt strength, durability and the workability.

In one embodiment, the content of the ethylene monomer in the EAG is not limited, but may be, for example, 50 wt% to 88 wt%, 55 wt% to 82 wt%, or 57 wt% to 78 wt% based on the total weight of the EAG.

In one embodiment, the content of a glycidyl (meth)acrylate monomer in the EAG is not limited, but may be, for example, 1 wt% to 30 wt%, 3 wt% to 25 wt%, or 5 wt% to 20 wt% based on the total weight of the EAG.

In one embodiment, the content of an alkyl (meth)acrylate monomer in the EAG is not limited, but may be, for example, 10 wt% to 48 wt%, 15 wt% to 42 wt%, or 17 wt% to 38 wt% based on the total weight of the EAG.

In exemplary embodiments, the content of the PLGA polymer may exceed 65 wt% and less than 100 wt% based on a total weight of the poly(lactic-co-glycolic acid)-containing resin composition.

When the content of the PLGA polymer is 65 wt% or less based on the total weight of the poly(lactic-co-glycolic acid)-containing resin composition, the biodegradability by the PLGA polymer may be decreased. In addition, as the content of the PLGA polymer is decreased, the crystallinity of the poly(lactic-co-glycolic acid) may be reduced, thereby the gas barrier properties may be decreased.

When the poly(lactic-co-glycolic acid)-containing resin composition is formed only of the PLGA polymer, the biodegradability may be excessively good. Accordingly, when the poly(lactic-co-glycolic acid)-containing resin composition is used as a packaging material, etc., self-decomposition may occur during the delivery process, such that the stability may be decreased.

In some embodiments, the content of the PLGA polymer may be 65 wt% to 98 wt%, 65 wt% to 93 wt%, 65 wt% to 90 wt%, or 65 wt% to 88 wt% based on the total weight of the poly(lactic-co-glycolic acid)-containing resin composition.

Within the above content range, the PLGA polymer may be distributed throughout an entire area of the poly(lactic-co-glycolic acid)-containing resin composition. Accordingly, the poly(lactic-co-glycolic acid)-containing resin composition may have improved biodegradability, and additional components other than the PLGA polymer may be sufficiently added to the resin composition, thereby improving the structural stability. Accordingly, melt strength, durability, and workability may be improved while maintaining low gas transmittance rate.

In one embodiment, the content of the PLGA polymer may be 65 wt% to 85 wt%, 68 wt% to 85 wt%, 70 wt% to 85 wt%, or 70 wt% to 80 wt% based on the total weight of the poly(lactic-co-glycolic acid)-containing resin composition. Within the above content range, the biodegradability, durability and workability of the poly(lactic-co-glycolic acid)-containing resin composition may be further improved.

In some embodiments, the content of the ZnIO may be 1 wt% to 34 wt%, 2 wt% to 33 wt%, 5 wt% to 30 wt%, or 5 wt% to 28 wt% based on the total weight of the poly(lactic-co-glycolic acid)-containing resin composition.

Within the above content range, while preventing the gas transmittance rate from decreasing due to an increase of the ZnIO and a decrease of the PLGA polymer, the zinc ion of the ZnIO may form a coordination bond with the ester group of the PLGA polymer, thereby improving the structural stability and durability. In addition, the hygroscopic property is reduced, such that it is possible to prevent the polymer structure from collapsing due to the high biodegradability of the poly(lactic-co-glycolic acid)-containing resin composition.

In one embodiment, the content of the ZnIO may be 5 wt% to 25 wt%, 5 wt% to 20 wt%, 10 wt% to 20 wt%, or 10 wt% to 15 wt% based on the total weight of the poly(lactic-co-glycolic acid)-containing resin composition. Within the above content range, the structural stability and durability of the poly(lactic-co-glycolic acid)-containing resin composition may be further improved.

In some embodiments, the content of the ethylene terpolymer (e.g., EAG) may be 1 wt% to 34 wt%, 2 wt% to 33 wt%, 5 wt% to 30 wt%, or 5 wt% to 28 wt% based on the total weight of the poly(lactic-co-glycolic acid)-containing resin composition.

Within the above content range, the ethylene terpolymer (e.g., EAG) may be crosslinked with the carboxyl group of the PLGA polymer and the ZnIO, such that the melt strength and workability of the poly(lactic-co-glycolic acid)-containing resin composition may be further improved.

In one embodiment, the content of the ethylene terpolymer (e.g., EAG) may be 5 wt% to 25 wt%, 5 wt% to 20 wt%, 5 wt% to 15 wt%, or 10 wt% to 15 wt% based on the total weight of the poly(lactic-co-glycolic acid)-containing resin composition. Within the above content range, the melt strength and workability of the poly(lactic-co-glycolic acid)-containing resin composition may be further improved.

In some embodiments, the content of the ethylene terpolymer (e.g., EAG) in the total weight of the poly(lactic-co-glycolic acid)-containing resin composition may be the content of the ZnIO or more. Accordingly, the melt flow index of the poly(lactic-co-glycolic acid)-containing resin composition may be appropriately reduced without deteriorating the biodegradability thereof. Therefore, the workability of the poly(lactic-co-glycolic acid)-containing resin composition may be improved, thereby facilitating to manufacture the film.

In one embodiment, the content of the ethylene terpolymer (e.g., EAG) in the total weight of the poly(lactic-co-glycolic acid)-containing resin composition may be the content of the ZnIO or more. Accordingly, the workability of the poly(lactic-co-glycolic acid)-containing resin may be further improved.

As described above, the melt viscosity and melt flow index may be controlled by adjusting the contents of the PLGA polymer, ZnIO and ethylene terpolymer included in the poly(lactic-co-glycolic acid)-containing resin composition.

In some embodiments, a melt viscosity of the poly(lactic-co-glycolic acid)-containing resin composition may be 500 Pa s to 20,000 Pa s, 1,000 Pa s to 18,000 Pa s, 1,500 Pa s to 15,000 Pa s, 1,500 Pa·s to 12,000 Pa·s, 1,500 Pa·s to 8,000 Pa·s, or 2,000 Pa·s to 8,000 Pa·s.

The melt viscosity is a value measured at a strain of 5% and a frequency of 0.1 Hz on a specimen prepared by pressing the poly(lactic-co-glycolic acid)-containing resin composition to a thickness of 2 mm at 230 °C.

In one embodiment, the melt flow index of the poly(lactic-co-glycolic acid)-containing resin composition may be 1 g/10 min to 100 g/10 min, 10 g/10 min to 100 g/10 min, 10 g/10 min to 80 g/10 min, 15 g/10 min to 60 g/10 min, or 20 g/10 min to 60 g/10 min.

The melt flow index is a value measured by a mass (g) in which the poly(lactic-co-glycolic acid)-containing resin composition moves for 10 minutes under conditions of a temperature of 230 °C and a load of 2.16 kg.

When the melt viscosity and melt flow index are maintained within the above ranges, the poly(lactic-co-glycolic acid)-containing resin composition may have improved flexibility and structural stability compared to the PLGA polymer. Therefore, for example, workability may be improved in processing such as foaming-expansion molding, injection molding, compression molding, casting film molding, and inflation film molding processes. Accordingly, workability from the poly(lactic-co-glycolic acid)-containing resin composition to the film may be improved.

The above-described poly(lactic-co-glycolic acid)-containing resin composition may be formed by drying and kneading a mixture of the PLGA polymer, ZnIO and ethylene terpolymer.

In exemplary embodiments, the PLGA polymer, ZnIO and ethylene terpolymer may be introduced into a hopper dryer.

The PLGA polymer and ZnIO may be introduced into the hopper dryer maintained at a temperature condition of, for example, 60 °C to 100 °C, 70 °C to 90 °C, or 75 °C to 85 °C and dried. The ethylene terpolymer (e.g., EAG) may be introduced into the hopper dryer maintained at a temperature condition of, for example, 20 °C to 60 °C, 30 °C to 50 °C, or 35 °C to 45 °C and dried.

The PLGA polymer, ZnIO and ethylene terpolymer may be dried for, for example, 10 hours to 14 hours, 11 hours to 13 hours, or 11.5 hours to 12.5 hours. Within the above range, the PLGA polymer, ZnIO and ethylene terpolymer may be sufficiently dried such that side reactions in the kneading process of the PLGA polymer, ZnIO and ethylene terpolymer may be suppressed.

The dried PLGA polymer, ZnIO and ethylene terpolymer may be introduced into a chamber of an internal mixer. The chamber of the internal mixer may be maintained at, for example, 210 °C to 250 °C, 220 °C to 240 °C, or 225 °C to 235 °C.

When the dried PLGA polymer, ZnIO and ethylene terpolymer are introduced into the internal mixer, a rotor inside the internal mixer may rotate at a rotation speed of, for example, 10 rpm to 70 rpm, 20 rpm to 60 rpm, or 30 rpm to 50 rpm.

Within the above range, kneading may be initiated while preventing the PLGA polymer, ZnIO and ethylene terpolymer from being agglomerated with each other.

After the introduction of the dried PLGA polymer, ZnIO and ethylene terpolymer is completed, kneading may be performed while the rotation speed of the rotor may be maintained at, for example, 60 rpm to 100 rpm, 70 rpm to 90 rpm, or 75 rpm to 85 rpm. The kneading may be performed for, for example, 1 minute to 5 minutes, 2 minutes to 4 minutes, or 2.5 minutes to 3.5 minutes.

Within the above speed and time ranges, the PLGA polymer, ZnIO and ethylene terpolymer may be uniformly distributed to complete kneading.

As described above, the kneaded product may be recovered to obtain the poly(lactic-co-glycolic acid)-containing resin composition.

Although the above-described kneading process has been described as being performed with the internal mixer, the kneading process is not limited to the case of being performed with the internal mixer. For example, the dried PLGA polymer, ZnIO and ethylene terpolymer may be introduced into a single-screw extruder or a twin-screw extruder, followed by performing melting and kneading to complete the kneading. The resin composition that has been kneaded and discharged through a discharge port of the single-screw extruder or twin-screw extruder may be cut in a pelletizer to obtain the poly(lactic-co-glycolic acid)-containing resin composition in the form of pellets.

According to exemplary embodiments, a film may be formed from the above-described poly(lactic-co-glycolic acid)-containing resin composition. Accordingly, the gas transmittance (e.g., the oxygen transmittance) of the film may be reduced, and the biodegradability and durability may be improved.

In some embodiments, the film may have a thickness of 100 $\mu$m to 300 $\mu$m, 150 $\mu$m to 300 $\mu$m, or 150 $\mu$m to 250 $\mu$m. Within the above range, the gas transmittance to the film may be sufficiently reduced.

In one embodiment, the oxygen transmittance of the film may be 50 g/m$^2$ day or less, 25 g/m$^2$ day or less, 10 g/m$^2$ day or less, 5 g/m$^2$ day or less, or 1 g/m$^2$ day or less. The lower limit of the oxygen transmittance of the film is not limited, but for example, the oxygen transmittance of the film may exceed 0 g/m$^2$·day, 0.1 g/m$^2$·day or more, 0.2 g/m$^2$·day or more, or 0.5 g/m$^2$·day or more.

The oxygen transmittance may be measured under a relative humidity condition of 0% and a temperature condition of 25 °C.

Within the above oxygen transmittance range, when the film is used as a barrier film, the barrier property against gas (e.g., oxygen) is improved, such that a product contained in the barrier film may be sufficiently protected.

When the PLGA polymer included in the poly(lactic-co-glycolic acid)-containing resin composition is included in an amount of 65 wt% to 98 wt%, the PLGA polymer may be uniformly arranged over the entire area of the poly(lactic-co-glycolic acid)-containing resin composition. In addition, the structural stability may be improved through a material other than the PLGA polymer. Accordingly, the high biodegradability of the PLGA polymer and the biodegradability of the film including the poly(lactic-co-glycolic acid)-containing resin composition may be appropriately maintained by the material other than the PLGA polymer (e.g., the ZnIO, ethylene terpolymer, etc.).

In some embodiments, a mass reduction rate of the film calculated according to Equation 1 below may be 5% to 85%, 5% to 80%, 5% to 75%, or 8% to 73%.

[Equation 1]

$$\text{Mass reduction rate } (\%) = \frac{W_i - W_f}{W_i} \times 100$$

wherein $W_i$ is an initial mass (g) of the film, and $W_f$ is a mass (g) of the film measured after the film is left in soil under composting conditions according to ISO 20200 for 6 months.

Within the mass reduction rate range, the biodegradability of the film may not be excessively high, such that the film may be appropriately formed, and the formed film may be used as a packaging material. For example, when the film is used as the packaging material, it may not be decomposed during the distribution process, etc.

The poly(lactic-co-glycolic acid)-containing resin composition may include the PLGA polymer in an amount of 65 wt% or more, such that the oxygen transmittance of the poly(lactic-co-glycolic acid)-containing resin composition may be maintained low. For example, the oxygen transmittance of the poly(lactic-co-glycolic acid)-containing resin composition may be measured lower than an arithmetic mean value of the oxygen transmittance of each of the polymer components contained in the poly(lactic-co-glycolic acid)-containing resin composition.

In some embodiments, an oxygen transmittance rate of the film may satisfy Equation 2 below.

$$[\text{Equation 2}]$$

$$OTR\,(PLGA\text{-}Poly) \;<\; 0.1\,(x{\cdot}OTR\,(PLGA) + (1{-}x){\cdot}OTR\,(Poly))$$

In Equation 2 above, OTR (PLGA-Poly) is the oxygen transmittance rate of the film formed from the poly(lactic-co-glycolic acid)-containing resin composition, OTR (PLGA) is an oxygen transmittance rate of the film including only poly(lactic-co-glycolic acid), OTR (Poly) is an oxygen transmittance rate of a film including only a resin including a zinc-containing ionomer or an ethylene terpolymer, and x is in a range of $0.65 \le x < 1$.

The film may be provided as a barrier film for packaging materials of various products, for example, a packaging material for packaging food, a packaging material for packaging a battery and the like.

The above-described film may be manufactured from the poly(lactic-co-glycolic acid)-containing resin composition.

According to exemplary embodiments, the poly(lactic-co-glycolic acid)-containing resin composition may be pressed through a press to manufacture the film.

In some embodiments, the press may be maintained at 200 °C to 260 °C, 210 °C to 250 °C, 220 °C to 240 °C, or 225 °C to 235 °C. Within the above range, the film including the poly(lactic-co-glycolic acid)-containing resin composition may be formed and deformed.

In some embodiments, the poly(lactic-co-glycolic acid)-containing resin composition may be pressed at a pressure of 10 MPa to 30 MPa, 15 MPa to 25 MPa, or 18 MPa to 22 MPa for 1 minute to 3 minutes, or 1.5 minutes to 2.5 minutes.

Within the above range, the film may be manufactured to have the above-described thickness. Accordingly, a film having a thin thickness with reduced oxygen transmittance may be manufactured.

The above-described film preparation has been described as the case of being manufactured by pressing the resin composition through the press, but the film manufacturing method is not limited thereto. For example, the poly(lactic-co-glycolic acid)-containing resin composition melted in the extruder may be extruded from a T-die to a chill roll and cooled, to manufacture the film (for example, a casting film manufacturing method). For example, the poly(lactic-co-glycolic acid)-containing resin composition may be cooled by air contact through an air ring in a ring-shaped die (for example, a spiral die, etc.) to manufacture the film (for example, a blown film manufacturing method).

**Examples and Comparative Examples**

**Example 1**

**(1) Preparation of raw material for poly(lactic-co-glycolic acid)-containing resin composition**

Poly(lactic-co-glycolic acid) (PLGA) was dried in a hopper dryer set to 80 °C for 12 hrs to prepare a dried PLGA.

A terpolymer of ethylene, zinc acrylate and acrylic acid was dried in the hopper dryer set to 80 °C for 12 hrs to prepare a dried terpolymer of ethylene, zinc acrylate and acrylic acid. Contents of ethylene monomer, zinc acrylate monomer, and acrylic acid monomer in the terpolymer of ethylene, zinc acrylate and acrylic acid were about 86.4 wt%, 6.8 wt%, and 6.8 wt%, respectively.

The terpolymer (EAG) of ethylene, glycidyl methacrylate and methyl acrylate was dried in the hopper dryer set at 40 °C for 12 hrs to prepare a dried EAG. The contents of ethylene monomer, glycidyl methacrylate monomer and methyl acrylate monomer in the EAG were 68 wt%, 8 wt% and 24 wt%, respectively.

Mitsui hot air dryer was used as the hopper dryer.

**(2) Preparation of poly(lactic-co-glycolic acid)-containing resin composition**

The dried PLGA, the dried terpolymer of ethylene and zinc acrylate acrylic acid, and the dried EAG were introduced into a chamber of an internal mixer at a ratio of 80 wt%, 10 wt% and 10 wt%, respectively. A temperature inside the chamber of the internal mixer was maintained at 230 °C, and a rotor of the internal mixer rotated at a speed of 40 rpm.

Thereafter, the speed of the rotor was increased to 80 rpm, and kneading was performed for 3 minutes, and then a poly(lactic-co-glycolic acid)-containing resin composition as a kneading product was prepared and recovered.

Brabender Measuring Mixer W50 was used as the internal mixer.

**(3) Manufacturing of Film**

The poly(lactic-co-glycolic acid)-containing resin composition was pressed at a pressure of 20 MPa for 2 minutes using a press set to 230 °C to manufacture a film.

**Examples 2 to 5 and Comparative Examples 1 to 9**

Poly(lactic-co-glycolic acid)-containing resin compositions and films of Examples 2 to 5 and Comparative Examples 1 to 9 were manufactured according to the same procedures as described in Example 1, except that the types of PLGA used and the weight ratios of the dried PLGA, the dried ethylene, the terpolymer of zinc acrylate and acrylic acid, and the dried EAG to be introduced into the chamber of the internal mixer were adjusted as shown in Table 1 below.

[TABLE 1]

|  | PLGA Content (wt%) | Copolymer of ethylene and zinc (meth)acrylate (wt%) | EAG (wt%) |
|---|---|---|---|
| Example 1 | 80 | 10 | 10 |
| Example 2 | 70 | 15 | 15 |
| Example 3 | 65 | 10 | 25 |
| Example 4 | 65 | 20 | 15 |
| Example 5 | 90 | 5 | 5 |
| Comparative example 1 | 65 | 0 | 32 |
| Comparative example 2 | 65 | 35 | 0 |
| Comparative example 3 | 60 | 20 | 20 |
| Comparative example 4 | 60 | 10 | 30 |
| Comparative example 5 | 60 | 30 | 10 |
| Comparative example 6 | 50 | 25 | 25 |
| Comparative example 7 | 100 | 0 | 0 |
| Comparative example 8 | 0 | 100 | 0 |
| Comparative example 9 | 0 | 0 | 100 |

**Experimental Example 1**

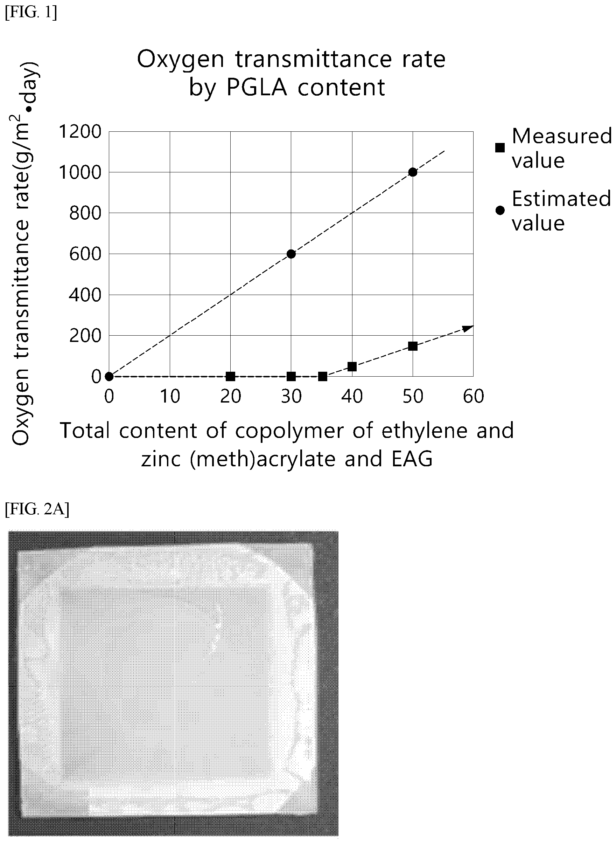

FIG. 1 is a graph illustrating measured values and estimated values of the oxygen transmittance rate of the film according to a sum of the content of the terpolymer of ethylene, zinc acrylate and acrylic acid included in the poly(lactic-co-glycolic acid)-containing resin composition and the content of EAG.

The estimated value of the oxygen transmittance rate represents a value obtained by calculating an arithmetic average of the oxygen transmittance rate of PLGA, the oxygen transmittance rate of the terpolymer of ethylene, zinc acrylate and acrylic acid, and the oxygen transmittance rate of EAG included in the poly(lactic-co-glycolic acid)-containing resin composition according to the weight ratio.

The measured value of the oxygen transmittance rate represents a value obtained by measuring the oxygen transmittance rate of the film including the poly(lactic-co-glycolic acid)-containing resin composition. The measured values of Examples 1, 2 and 3, and Comparative Examples 3 and 6 were used as the measured values of the oxygen transmittance rate of the film.

Referring to FIG. 1, the estimated values of the oxygen transmittance rate of the film were calculated to increase linearly according to the sum of the content of the terpolymer of ethylene, zinc acrylate and acrylic acid and the content of EAG.

However, in the case of the oxygen transmittance rate measured values of the film, when the sum of the content of the terpolymer of ethylene, zinc acrylate and acrylic acid and the content of EAG was 35 wt% or less (PLGA exceeded 65 wt%) based on the total weight of the film, the oxygen transmittance rate was maintained low. In addition, when the sum of the content of the terpolymer of ethylene, zinc acrylate and acrylic acid and the content of EAG exceeded 35 wt% based on the total weight of the film, the oxygen transmittance rate was measured to increase in proportion to the contents.

**Experimental Example 2**

(1) Measurement of melt viscosity

The poly(lactic-co-glycolic acid)-containing resin compositions prepared according to the above-described examples and comparative examples were pressed to a thickness of 2 mm at a temperature condition of 230 °C, and then melt viscosities were measured using a viscometer (TA ARES).

The viscosity meter was set under conditions of 230 °C, 5% strain, and 0.1 Hz to 500 Hz frequency, and the viscosity value measured at a frequency of 0.1 Hz was determined as the melt viscosity.

(2) Measurement of melt flow index

The melt flow indexes of the poly(lactic-co-glycolic acid)-containing resin compositions prepared according to the above-described examples and comparative examples were measured under a temperature condition of 230 °C and a load condition of 2.16 kg according to ASTM D1238.

(3) Measurement of oxygen transmittance rate

The films manufactured according to the above-described examples and comparative examples were mounted on an oxygen transmittance rate meter (MOCON OX TRANS model 2/61) to measure oxygen transmittance rates.

The oxygen transmittance rate was measured as a value of a point where the transmittance was stabilized after measuring for 12 hours under a relative humidity condition of 0% and a temperature condition of 25 °C.

The upper limit of the oxygen transmittance rate measured value was 1,200 $g/m^2 \cdot day$, and the oxygen transmittance rate of the film that exceeded the upper limit and was not measured is indicated as 'Exceeded' in Table 2.

(4) Measurement of mass reduction rate - evaluation of biodegradability

The films manufactured according to the above-described examples and comparative examples were cut into a size of 5 cm in width and 5 cm in length, and masses ($W_i$) of the cut films were measured.

Then, after the films were left in soil under composting conditions according to ISO 20200 for 6 months, masses ($W_f$) were measured.

The mass reduction rate was calculated using Equation 1 below using the measured mass ($W_i$) of the cut film and the mass ($W_f$) after leaving the same.

[Equation 1]

$$\text{Mass reduction rate } (\%) = \frac{W_i - W_f}{W_i} \times 100$$

As the soil under composting conditions, soil including 40 wt% of sawdust, 30 wt% of rabbit feed, 10 wt% of ripened compost, 10 wt% of corn starch, 5 wt% of saccharose, 4 wt% of cornseed oil, and 1 wt% of urea was used.

Evaluation results are shown in Table 2 below.

[TABLE 2]

| | Melt viscosity (Pa·s) | Melt flow index (g/10 min) | Oxygen transmittance rate | | Mass reduction rate (%) |
|---|---|---|---|---|---|
| | | | g/m²·day | g·μm/m²·day | |
| Example 1 | 2,040 | 57 | 0.52 | 109.2 | 45 |
| Example 2 | 4,365 | 36 | 0.65 | 156.0 | 26 |
| Example 3 | 12,987 | 15 | 0.94 | 206.8 | 9.8 |
| Example 4 | 4,523 | 31 | 0.91 | 209.3 | 10 |
| Example 5 | 1,523 | 67 | 0.38 | 83.6 | 70 |
| Comparative example 1 | 28,450 | 6 | 1.20 | 252.0 | 7.9 |
| Comparative example 2 | 1,776 | 54 | 1.00 | 210.0 | 7.2 |
| Comparative example 3 | 7,885 | 20 | 72.4 | 15,928 | 2.2 |
| Comparative example 4 | 23,225 | 9 | 65.9 | 13,180 | 1.9 |
| Comparative example 5 | 3,384 | 28 | 63.3 | 13,293 | 1.9 |
| Comparative example 6 | 16,730 | 9 | 147.0 | 32,340 | 1.2 |
| Comparative example 7 | 105 | 135 | 0.48 | 120.0 | 99 |
| Comparative example 8 | 10,523 | 6 | Exceeded | Exceeded | 0.2 |
| Comparative example 9 | 1,685 | 12 | Exceeded | Exceeded | 0.3 |

Referring to Table 2, examples including PLGA, zinc-containing ionomer and ethylene copolymer, and in which the content of PLGA is 65 wt% or more based on the total weight of the poly(lactic-co-glycolic acid)-containing resin composition, exhibited oxygen transmittance rate of less than 1.0 g/m²·day.

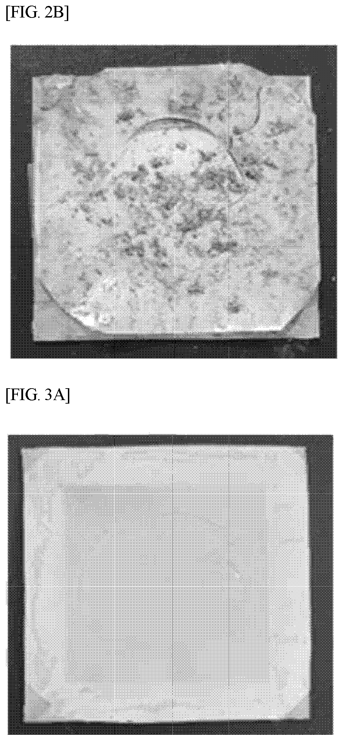

FIGS. 2A and 2B are a photograph of a film according to Example 3 and a photograph illustrating a degree of biodegradation when the film is left in soil under composting conditions, respectively. Referring to FIGS. 2A and 2B, and Table 2, when PLGA is included in an amount of 65 wt% based on the total weight of the poly(lactic-co-glycolic acid)-containing resin composition, partial biodegradation occurred while the low oxygen transmittance rate of the film was maintained low.

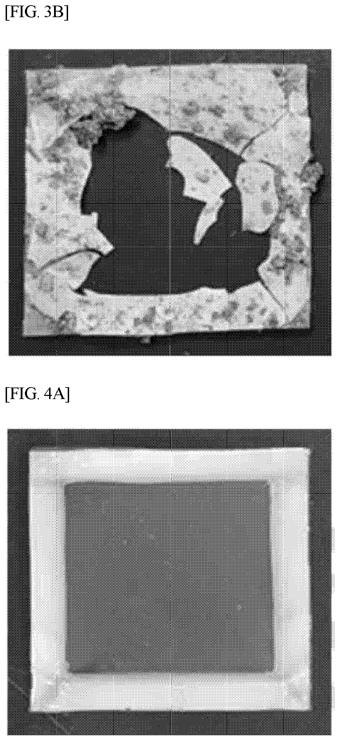

FIGS. 3A and 3B are a photograph of a film according to Example 5 and a photograph illustrating the degree of biodegradation when the film is left in soil under composting conditions, respectively. Referring to FIGS. 3A and 3B, and Table 2, when PLGA was included at 90 wt% based on the total weight of the poly(lactic-co-glycolic acid)-containing resin composition, the oxygen transmittance rate of the film was slightly reduced and the biodegradability was slightly increased.

In Comparative Example 1 where a film which did not include a zinc-containing ionomer was used, the melt viscosity was increased, and a partially non-melted portion was found.

In Comparative Example 2 where a film which did not include an ethylene copolymer was used, phase separation between the PLGA and the zinc-containing ionomer occurred.

In Comparative Examples 3 to 6 where the PLGA content was 60 wt% or less based on the total weight of the poly(lactic-co-glycolic acid)-containing resin composition, the oxygen transmittance rate was increased.

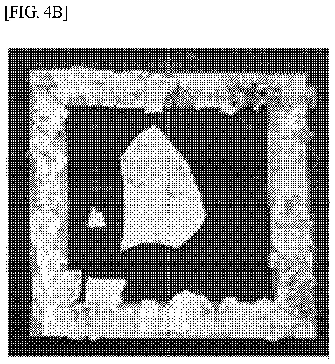

FIGS. 4A and 4B are photographs illustrating the degree of biodegradation of a film according to Comparative Example 7 and the film when left in soil under composting conditions, respectively. Referring to FIGS. 4A and 4B, and Table 2, the biodegradability of the film was increased excessively.

In Comparative Examples 8 and 9 which did not include PLGA, the oxygen transmittance rate was increased.

## Claims

1. A resin composition including poly(lactic-co-glycolic acid), the resin composition comprising:

    a poly(lactic-co-glycolic acid) (PLGA) polymer;
    a zinc-containing ionomer; and
    an ethylene terpolymer,
    wherein the PLGA polymer is 65 % by weight or more and less than 100 % by weight based on a total weight of the resin composition.

2. The resin composition according to claim 1, wherein the zinc-containing ionomer comprises a terpolymer of ethylene, zinc (meth)acrylate and (meth)acrylic acid.

3. The resin composition according to claims 1 or 2, wherein the ethylene terpolymer comprises a copolymer of ethylene, glycidyl (meth)acrylate and alkyl (meth)acrylate.

4. The resin composition according to one of claims 1 to 3, wherein a content of the PLGA polymer is 65 % by weight to 98 % by weight based on the total weight of the resin composition.

5. The resin composition according to one of claims 1 to 4, wherein a content of the zinc-containing ionomer is 1 % by weight to 34 % by weight based on the total weight of the resin composition.

6. The resin composition according to one of claims 1 to 5, wherein a content of the ethylene terpolymer is 1 % by weight to 34 % by weight based on the total weight of the resin composition.

7. The resin composition according to one of claims 1 to 6, wherein a sum of the content of the zinc-containing ionomer and the content of the ethylene terpolymer is 2 % by weight to 35 % by weight based on the total weight of the resin composition.

8. The resin composition according to one of claims 1 to 7, wherein a content of the ethylene terpolymer is the content of the zinc-containing ionomer or more in the total weight of the resin composition.

9. The resin composition according to one of claims 1 to 8, wherein a melt viscosity of the resin composition measured under conditions of 230°C, 5% strain, and 0.1 Hz frequency is 500 Pa·s to 20,000 Pa·s.

10. The resin composition according to one of claims 1 to 9, wherein a melt flow index of the resin composition measured under conditions of 230°C and 2.16 kg load is 1 g/10 min to 100 g/10 min.

11. A film formed from the resin composition one of claims 1 to 10.

12. The film according to claim 11, wherein the film has a thickness of 100 $\mu$m to 300 $\mu$m.

13. The film according to claim 12, wherein an oxygen transmittance rate of the film measured at a relative humidity of 0% and a temperature of 25 °C is 50 g/m$^2$·day or less.

14. The film according to one of claims 11 to 13, wherein a mass reduction rate of the film calculated according to Equation 1 below is 5% to 85%:

[Equation 1]

$$\text{Mass reduction rate (\%)} = \frac{W_i - W_f}{W_i} \times 100$$

wherein $W_i$ is an initial mass (g) of the film, and $W_f$ is a mass (g) of the film measured after the film is left in soil under composting conditions according to ISO 20200 for 6 months.

15. The film according to one of claims 11 to 14, wherein an oxygen transmittance rate of the film satisfies Equation 2 below:

[Equation 2]

$$\text{OTR (PLGA-Poly)} < 0.1\,(x \cdot \text{OTR (PLGA)} + (1-x) \cdot \text{OTR (Poly)})$$

wherein OTR (PLGA-Poly) is the oxygen transmittance rate of the film formed from the resin composition, OTR (PLGA) is an oxygen transmittance rate of a film including only poly(lactic-co-glycolic acid), OTR (Poly) is an oxygen transmittance rate of a film including only a resin including a zinc-containing ionomer or an ethylene terpolymer, and x is in a range of 0.65≤x< 1).

[FIG. 1]

Oxygen transmittance rate by PGLA content

[FIG. 2A]

[FIG. 2B]

[FIG. 3A]

[FIG. 3B]

[FIG. 4A]

[FIG. 4B]

<table>
<tr><td colspan="3">Europäisches<br>Patentamt<br>European<br>Patent Office<br>Office européen<br>des brevets</td><td align="center">**EUROPEAN SEARCH REPORT**</td><td>**Application Number**<br><br>EP 25 15 3848</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/213466 A1 (URADNISHECK JULIUS [US]) 13 September 2007 (2007-09-13)<br>* examples 9, 20 *<br>* claims 1, 5, 14, 20 *<br>- - - - - | 1-15 | INV.<br>C08J5/18<br>C08L67/04 |
| A | WENJIA SONG ET AL: "Effects of ionomer characteristics on reactions and properties of poly(lactic acid) ternary blends prepared by reactive blending", POLYMER, ELSEVIER, AMSTERDAM, NL, vol. 53, no. 12, 26 March 2012 (2012-03-26), pages 2476-2484, XP028487384, ISSN: 0032-3861, DOI: 10.1016/J.POLYMER.2012.03.050 [retrieved on 2012-04-02]<br>* the whole document *<br>- - - - - | 1-15 | |
| A | HONGZHI LIU ET AL: "Effects of reactive blending temperature on impact toughness of poly(lactic acid) ternary blends", POLYMER, ELSEVIER, AMSTERDAM, NL, vol. 53, no. 2, 17 December 2011 (2011-12-17), pages 272-276, XP028441570, ISSN: 0032-3861, DOI: 10.1016/J.POLYMER.2011.12.036 [retrieved on 2011-12-22]<br>* the whole document *<br>- - - - -<br><br>-/-- | 1-15 | TECHNICAL FIELDS SEARCHED (IPC)<br><br>C08J<br>C09J<br>C08L |

The present search report has been drawn up for all claims

| Place of search | Date of completion of the search | Examiner |
|---|---|---|
| Munich | 5 June 2025 | Vandoolaeghe, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

**Application Number**

EP 25 15 3848

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LIU HONGZHI ET AL: "Super Toughened Poly(lactic acid) Ternary Blends by Simultaneous Dynamic Vulcanization and Interfacial Compatibilization", MACROMOLECULES, vol. 43, no. 14, 30 June 2010 (2010-06-30), pages 6058-6066, XP093283729, US ISSN: 0024-9297, DOI: 10.1021/ma101108g * the whole document * | 1-15 | |
| A | LIU HONGZHI ET AL: "Interaction of Microstructure and Interfacial Adhesion on Impact Performance of Polylactide (PLA) Ternary Blends", MACROMOLECULES, vol. 44, no. 6, 16 February 2011 (2011-02-16), pages 1513-1522, XP093283730, US ISSN: 0024-9297, DOI: 10.1021/ma1026934 * the whole document * | 1-15 | TECHNICAL FIELDS SEARCHED (IPC) |
| T | US 2023/119820 A1 (DOORNHEIM MARTIN [NL]) 20 April 2023 (2023-04-20) * figure 1 * | 1-15 | |

The present search report has been drawn up for all claims

| Place of search | Date of completion of the search | Examiner |
|---|---|---|
| Munich | 5 June 2025 | Vandoolaeghe, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 3848

This annex lists the patent family members relating to the patent documents cited in the above-mentioned European search report.
The members are as contained in the European Patent Office EDP file on
The European Patent Office is in no way liable for these particulars which are merely given for the purpose of information.

05-06-2025

| Patent document cited in search report | Publication date | Patent family member(s) | Publication date |
|---|---|---|---|
| US 2007213466 A1 | 13-09-2007 | US 2007213466 A1<br>WO 2008030599 A2 | 13-09-2007<br>13-03-2008 |
| US 2023119820 A1 | 20-04-2023 | CA 3174463 A1<br>CN 115515788 A<br>EP 4114660 A1<br>JP 2023522144 A<br>KR 20220148885 A<br>US 2023119820 A1<br>WO 2021176067 A1 | 10-09-2021<br>23-12-2022<br>11-01-2023<br>29-05-2023<br>07-11-2022<br>20-04-2023<br>10-09-2021 |

EPO FORM P0459

For more details about this annex : see Official Journal of the European Patent Office, No. 12/82